Europäisches Patentamt

European Patent Office

Office européen des brevets

(19)

(11) Publication number: **0 064 823**
**B1**

(12) **EUROPEAN PATENT SPECIFICATION**

(45) Date of publication of patent specification: **12.12.84**

(51) Int. Cl.³: **A 62 C 3/12, A 62 C 35/12**

(21) Application number: **82302031.8**

(22) Date of filing: **20.04.82**

(54) Fire protective powder puff out panel.

(30) Priority: **27.04.81 GB 8112898**

(43) Date of publication of application:
**17.11.82 Bulletin 82/46**

(45) Publication of the grant of the patent:
**12.12.84 Bulletin 84/50**

(84) Designated Contracting States:
**FR GB IT SE**

(56) References cited:
**DE-A-2 728 484**
**DE-A-2 824 109**
**GB-A-1 209 918**
**GB-A-1 453 836**
**GB-A-1 454 493**
**GB-A-1 454 494**
**GB-A-1 533 653**
**GB-A-1 603 085**

(73) Proprietor: **The Secretary of State for Defence in Her Britannic Majesty's Government of The United Kingdom of Great Britain and Northern Ireland Whitehall London SW1A 2HB (GB)**

(72) Inventor: **Henson, Colin**
**43 Loddon Way**
**Ash Hampshire (GB)**
Inventor: **Wyeth, Harold William Gerald**
**Hunter's Hill Petersfield Road Monkwood Alresford Hamsphire (GB)**

(74) Representative: **Miller, Ronald Anthony et al Procurement Executive, Ministry of Defence Patents 1A4, Room 2014 Empress State Building Lillie Road London SW6 1TR (GB)**

Courier Press, Leamington Spa, England.

## Description

The present invention relates to means for resisting, preventing, damping or quelling, or resisting or preventing the spread, of fire. Such means are hereinafter called fire protection means. The invention is particularly concerned with fire protection in certain bays adjacent fuel tanks or tanks of other flammable substances found in vehicles and craft, especially aircraft. If a bay is penetrated by a projectile, even if not incendiary or if the tank is ruptured in an accident, fuel may leak into the bay and ignite.

U.K. Patent Specification 1454493 describes fire protection means and provides adjacent a flammable substance or a container therefore fire protection means comprising an encased and sealed reticulated structure containing an extinguishant powder. Powder dispersion may be improved by ensuring that the contents are at a pressure higher than that of the environment, the pressure being obtained with an inert gas such as nitrogen. The present invention provides an improvement in one form of these fire protection means which has been discovered to be particularly effective and advantageous.

According to the present invention a fire protection panel comprises:

a flexible resilient plastics three dimensionally reticulated structure,

a flexible plastics film envelope closely and impermeably encasing the structure, and

a fire extinguishant powder substantially filling the envelope and structure interstices,

and characterised in that the structure is compressed within the envelope, whereby upon rupture of the envelope the structure expands and imparts a dispersive momentum to at least some of the powder. Compression of the structure may be obtained by quilting the panel at discrete locations, by outgassing (evacuating) the contents of the evelope prior to sealing, or a combination of both, inter alia.

In addition to attenuating the moisture content of the envelope and compressing the structure, outgassing may be employed to preform the panel to fit, for example, around a pipe or duct. It also has the effect of compensating for the expansion of the panel, at low pressures or elevated temperatures, such as might be met in an aircraft.

Suitable reticulated structures include open pored polyurethane polyether and polyester foams, with the cell walls not necessarily fully blown, so that there is enhanced resistance to powder compaction, and so-called melded fibre structures formed by adhering carded masses of polyester or polyamide fibres at contact points thereof. Such welded fibres are manufactured and sold by ICI Fibres Ltd under the trade names Atomel and Promel. Preferably the structure has 27—39 pores per linear cm (70—100 pores per linear inch) in the uncompressed state.

Suitable extinguishant powders include potassium cryolite, potassium and sodium bicarbonates, aluminium phosphates, potassium bicarbonates with urea reaction products, potassium dawsonite with potassium iodide and aluminium oxide. The latter is particularly attractive since the powder is non-corrosive and has been shown to be an effective extinguishant when used to suppress explosive fire development.

Dispersion of the powder is assisted if it is in finely ground form, e.g. calcined alumina, with a particle size of 1—3 microns, and fluidised with 1—2% by volume micronised hydrophilic silica as a dispersion and drying agent.

Candidate envelope films include polyvinylidene chloride, polyethersulphone and polyester. Any of the plastics membranes 'Saran' (TM) and 'Saranex' (TM) sold by Dow Chemical Ltd, 'Melinex' (TM) sold by ICI and 'Mylar' sold by Dupont may be suitable. Preferably the film is transparent so that the contents of the panel can be inspected, e.g. for a colour change indicating moisture content and for an unacceptable degree of powder compaction. The membrane need not for most applications, be attached to the reticulated structure. Where the panel is intended for attachment to a structure the designated outer skin may be more frangible or readily openable than the inner, as is described in U.K. Patent Specification 1 603085 for example.

It will be appreciated that, the powders indicated above being highly effective, and the powder, the structure and the envelope being of minimal density, very efficient, self generating fire protection of a dry bay can be obtained for an extremely small weight penalty. The panel may be under 3 cm thick, in an aircraft bay context typically 3—10 mm, and arranged to be coextensive with at least one bay wall.

The panel may be quilted or compartmentalised, especially if somewhat extensive, as an insurance against powder migration. Panels which are flexible and comprise discrete compartments 7—15 cm square are indeed particularly useful, since they can be cut to size along the seams and particularly readily attached as a retrofit, with adhesive or touch-and-close fastening means, to the wall of a typical aircraft bay adjacent a fuel tank. Considerable fire protection is then available even if only one compartment is opened, and the panel thereby provides a degree of multi-shot protection. If an adhesive path is used it can be arranged preferably to tear the compartment open in shock conditions but to be removable from whatever the panel is attached to, without opening the panel, by peeling or solvent action. Panels may thus be made flexible and carry discrete adhesive patches with removable covers, one per compartment if the panel is compartmentalised, on one face thereof.

The fire protective panel in accordance with the invention will now be described with reference to the accompanying drawing, of which:

Figure 1 shows a panel in section, and

Figure 2 shows panels in situ in bays in an aircraft wing.

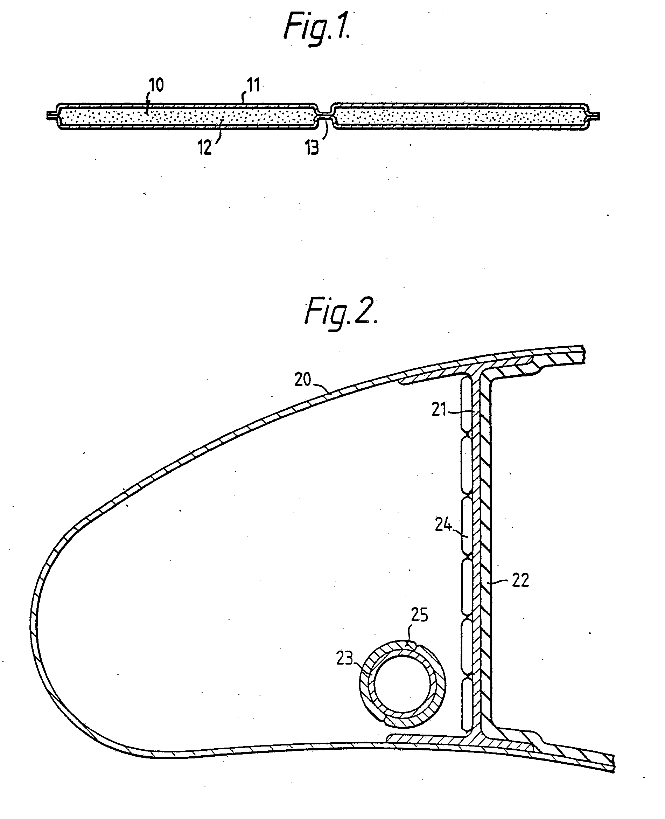

The panel shown in Figure 1 comprises structures 10 of flexible resilient 'Atomel' melded polyester fibres encased in an envelope 11 of transparent impermeable plastics film, in compartments. The structures are reticulated with 27—39 pores per linear cm (70—100 pores per linear inch) in all three dimensions. The structures are substantially filled with extinguishant powder 12 comprising calcined alumina of 1—3 microns particle size fluidised with 2% by volume micronised hydrophilic silica.

The powder is introduced by evacuating and back-filling each compartment prior to final seam welding at for example 13 in Figure 1, whilst retaining a vacuum therein of the order of 0,133 Pa ($10^{-3}$ Torr). The vacuum causes the structure to be compressed and increases resistance to powder migration and assists upon rupture of the envelope, in propelling powder out of the compartment.

Figure 2 shows a bay in the leading edge of an aircraft wing, formed by a skin 20 and an LE (leading edge) spar 21. To the rear of the spar is a fuel tank 22, while the bay contains a fuel pipe 23. A panel 24 of the type described above with reference to Figure 1 but spot weld quilted instead of seam weld compartmentalised is attached to the front face of the spar 21 with an adhesive. Panels 25, formed to the shape of the pipe 23 during the evacuation process, are mounted on and surround the pipe.

In a specific embodiment of the panel illustrated in Figure 1, it is divided into discrete compartments 10 cm square by seams permitting the panel to be cut to a desired shape, and supplied with an adhesive patch on each compartment, the patch having a temporary backing strip which can be peeled off to expose the adhesive just prior to panel emplacement. The panel is 10 mm thick.

In an alternative embodiment to that shown in Figure 2, the panel 24 is attached to the leading edge skin 20 interior rather than to the spar 21.

## Claims

1. A fire protection panel comprising:

a flexible resilient plastics three dimensionally reticulated structure (10),

a flexible plastics film envelope (11) closely and impermeably encasing the structure (10), and

a fire extinguishant powder (12) substantially filling the envelope (11) and structure interstices,

and characterised in that the structure (10) is compressed within the envelope (11) whereby upon rupture of the envelope (11) the structure (10) expands and imparts a dispersive momentum to at least some of the powder.

2. A panel as claimed in claim 1 and wherein compression of the structure is obtained by quilting the panel at discrete locations.

3. A panel as claimed in claim 1 or claim 2 and wherein compression of the structure is obtained by outgassing the contents of the envelope (11) prior to sealing.

4. A panel as claimed in any one of claims 1 to 3 and wherein the reticulated structure comprises an open pored polyurethane polyether or polyester foam, with the cell walls not necessarily fully blown, so that there is enhanced resistance to powder compaction.

5. A panel as claimed in any one of claims 1 to 3 and wherein the reticulated structure comprises a melded fibre structure formed by adhering carded masses of polyester or polyamide fibres at contact points thereof.

6. A panel as claimed in any one of the preceding claims and wherein the structure has 27—39 pores per linear cm (70—100 pores per linear inch) in the uncompressed state.

7. A panel as claimed in any one of the preceding claims and wherein the extinguishant powder is any one or more of potassium cryolite, potassium and sodium bicarbonates, aluminium phosphates, potassium bicarbonates with urea reaction products, potassium dawsonite with potassium iodide and aluminium oxide.

8. A panel as claimed in any one of the preceding claims and wherein the powder has a particle size of 1—3 microns.

9. A panel as claimed in any one of the preceding claims and wherein the powder is fluidised with 1—2% by volume micronised hydrophilic silica as a dispersion and drying agent.

10. A panel as claimed in any one of the preceding claims and wherein the envelope film is any one or more of polyvinylidene chloride, polyethersulphone and polyester.

11. A panel as claimed in any one of the preceding claims and wherein the film is transparent.

12. A panel as claimed in any one of the preceding claims and divided by compartments by seams along which it is possible to cut to conform the panel to a desired area.

13. A panel as claimed in claim 12 and wherein the compartments are 7—10 cm square.

14. A panel as claimed in any one of the preceding claims and carrying on one exterior face at least one adhesive patch protected by a removable cover.

15. A panel as claimed in claim 14 and wherein the adhesive patch is arranged so that the panel will rather open upon shock penetration than the panel being removed from its mounting.

## Revendications

1. Panneau de protection contre l'incendie, comprenant:

une structure réticulée tridimensionnellement (10) de matière plastique souple et élastique,

une enveloppe (11) d'un film de matière plastique souple entourant étroitement et de manière imperméable la structure (10), et

une poudre (12) d'extinction d'incendie remplissant pratiquement l'enveloppe (11) et les interstices de la structure,

et caractérisé en ce que la structure (10) est comprimée dans l'enveloppe (11) si bien que, après rupture de l'enveloppe (11), la structure (10) se dilate et donne une énergie de dispersion à une partie au moins de la poudre.

2. Panneau selon la revendication 1, dans lequel la compression de la structure est obtenue par capitonnage du panneau à des emplacements séparés.

3. Panneau selon l'une des revendications 1 et 2, dans lequel la compression de la structure est obtenue par dégazage du contenu de l'enveloppe (11) avant la fermeture étanche.

4. Panneau selon l'une quelconque des revendications 1 à 3, dans lequel la structure réticulée comprend une mousse de polyuréthane polyéther ou polyester à pores ouverts, les parois des cellules n'étant pas obligatoirement totalement éclatées, si bien que la résistance à la compression de la poudre est accrue.

5. Panneau selon l'une quelconque des revendications 1 à 3, dans lequel la structure réticulée comprend une structure à fibres soudées par fusion, formée par collage de masses cardées de fibres polyester ou polyamide à leurs points de contact.

6. Panneau selon l'une quelconque des revendications précédentes, dans lequel la structure a 27 à 39 pores par centimètre linéaire à l'état non comprimé.

7. Panneau selon l'une quelconque des revendications précédentes, dans lequel la poudre d'extinction est formée d'une ou plusieurs des substances comprenant la cryolite de potassium, les bicarbonates de potassium et de sodium, le phosphate d'aluminium, le bicarbonate de potassium avec des produits de réaction de l'urée, la dawsonite de potassium avec de l'iodure de potassium et l'oxyde d'aluminium.

8 Panneau selon l'une quelconque des revendications précédentes, dans lequel la poudre a une dimension particulaire de 1 à 3 $\mu$m.

9. Panneau selon l'une quelconque des revendications précédentes, dans lequel la poudre est fluidisée par 1 à 2% en volume de silice hydrophile micronisée constituant un agent de dispersion et de séchage.

10. Panneau selon l'une quelconque des revendications précédentes, dans lequel le film de l'enveloppe est formé d'une ou plusieurs substances choisies parmi le chlorure de polyvinylidène, la polyéthersulfone et le polyester.

11. Panneau selon l'une quelconque des revendications précédentes, dans lequel le film est transparent.

12. Panneau selon l'une quelconque des revendications précédentes, divisé en compartiments par des soudures le long desquelles le panneau peut être coupé afin qu'il corresponde à une surface voulue.

13. Panneau selon la revendication 12, dans lequel les compartiments ont 7 à 10 cm de côté.

14. Panneau selon l'une quelconque des revendications précédentes, portant à une face externe au moins un patin adhésif protégé par un couvercle amovible.

15. Panneau selon la revendication 14, dans lequel le patin adhésif est disposé de manière que le panneau s'ouvre plutôt lors d'une pénétration par choc que lors du retrait du panneau de son dispositif de montage.

**Patentansprüche**

1. Feuerschutzplatte, bestehend aus einer dreidimensionalen Netzstruktur (10) aus biegsamem und elastischem Kunststoff,

einer Umhüllung (11) aus einem Film von nachgiebigem Kunststoff, die die Struktur (10) in enger und undruchlässiger Weise umgibt, und aus

einem Feuerlöschpulver (12), das die Umhüllung (11) und die Zwischenspalte der Struktur praktisch ausfüllt, dadurch gekennzeichnet, dass die Struktur (10) in der Umhüllung (11) derart gepresst ist, dass nach Ausbruch der Umhüllung (11) die Struktur (10) sich ausdehnt und zumindest einem Teil des Pulvers Zerstreuungsenergie ausliefert.

2. Platte nach Anspruch 1, in welcher der Zusammendruck der Struktur durch Polsterung der Platte an einzelnen Stellen erreicht wird.

3. Platte nach einem der Ansprüche 1 und 2, in welcher der Zusammendruck der Struktur durch Entgasung des Inhaltes der Umhüllung (11) vor dem dichten Verschluss erreicht wird.

4. Platte nach irgendeinem der Ansprüche 1 bis 3, in welcher die Netzstruktur aus einem Polyurethan Polyäther- bzw. Polyester- Schaum mit offenen Poren besteht, wobei die Zellenwände nicht zwangsläufig vollständig ausgebrochen sind, so dass der Zusammendruck-Widerstand des Pulvers erhöht wird.

5. Platte nach irgendeinem der Ansprüche 1 bis 3, in welcher die Netzstruktur aus einer Struktur mit durch Schmelzung miteinander verbundenen Fasern besteht, welche durch Klebung von gekrempelten Massen von Polyester bzw. Polyamid-Fasern an ihren Berührungspunkten gebildet wird.

6. Platte nach irgendeinem der vorhergehenden Ansprüche, in welcher die Struktur 27 bis 39 Poren pro Linearzentimeter im nicht zusammengepressten Zustand besitzt.

7. Platte nach irgendeinem der vorhergehenden Ansprüche, in welcher das Löschpulver aus einer bzw. mehreren Substanzen besteht, welche Kalium-Kryolith, Kalium- bzw. Natrium-Bikarbonat, Aluminium-Phosphat, Kalium-Bikarbonat mit Harnstoff-Reaktionsprodukten, Kalium-Dawsonit mit Kalium-Jodid und Aliminium-Oxid umfassen.

8. Platte nach irgendeinem der vorhergehenden Ansprüche, in welcher das Pulver eine Partikelgrösse von 1 bis 3 $\mu$m besitzt.

9. Platte nach irgendeinem der vorhergehenden Ansprüche, in welcher das Pulver durch 1 bis 2% Vol. mikronisierter Hydrophilsilika verflüssigt wird, die ein Zerstreuungs- und Trocknungsmittel darstellt.

10. Platte nach irgendeinem der vorhergehenden Ansprüche, in welcher der Film der Umhüllung aus einer bzw. mehreren Substanzen besteht, welche unter Polyvinyliden-Chlorid, Polyäthersulfon und Polyester ausgewählt werden.

11. Platte nach irgendeinem der vorhergehenden Ansprüche, in welcher der Film durchsichtig ist.

12. Platte nach irgendeinem der vorhergehenden Ansprüche, die in Räume durch Schweissraupen aufgeteilt ist, längs welcher die Platte abgeschnitten werden kann, damit sie einer gewünschten Fläche entspricht.

13. Platte nach Anspruch 12, in welcher die Seiten der Räume eine Länge von 7 bis 10 cm aufweisen.

14. Platte nach irgendeinem der vorhergehenden Ansprüche, die an einer Aussenseite mindestens einen durch einen herausnehmbaren Deckel geschützten sebstklebenden Gleitschuh trägt.

15. Platte nach Anspruch 14, in welcher der selbstklebende Gleitschuh derart angeordnet ist, dass die Platte sich eher bei einem Stosseintritt als beim Rückzug der Platte aus ihrer Lagerungsvorrichtung öffnet.

**0 064 823**

## Fig.1.

## Fig.2.